# EUROPEAN PATENT APPLICATION

(11) **EP 1 489 809 A1**
(43) Date of publication of application: **22.12.2004**
(21) Application number: 04009343.7
(22) Date of filing: 20.04.2004
(51) Int. Cl.: H04L 29/06

(54) **Network access system**

(30) Priority: 21.04.2003 JP 2003115618
(71) Applicant: NEC CORPORATION, Tokyo (JP)
(72) Inventor: Shimizu, Hiroshi, Tokyo (JP)
(74) Representative: VOSSIUS & PARTNER

(57) **Abstract**

An authentication server 10 executes authentication of a client 3 in an open network 1 in response to an authentication request from the client 3 at the time of the accessing of a department network 32 by the client 3. An address processing unit 3 executes, after the authentication of the client 3 by the authentication server 10 and on the basis of an instruction from the authentication server 10, an address processing of packet signal concerning packet communicationbetween the client 3 and the department network 32.

## Description

This application claims benefit of Japanese Patent Application No. 2003-115618 filed on April 21, 2003, the contents of which are incorporated by the reference.

The present invention relates to network access systems for accessing target networks and, more particularly to network access systems for accessing self-department networks from the outside thereof.

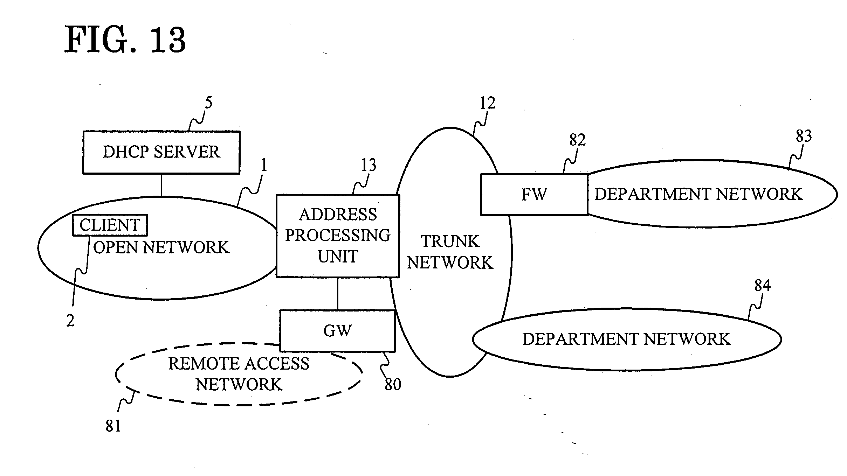

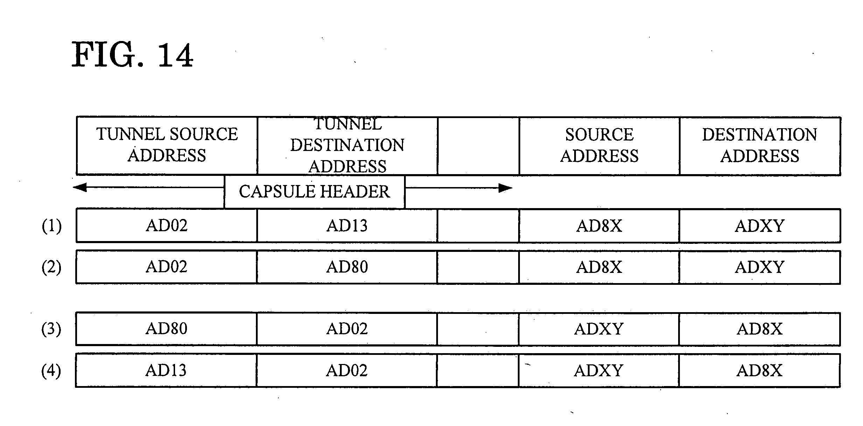

An example of the prior art network system will be described with reference to Figs. 13 and 14.

Referring to Fig. 13, this example has an arrangement comprising an open network 1 such as internet for open accessing, local area networks in enterprises (i.e., trunk network 12, remote access network 81 and department networks 83 and 84) and an address processing unit 13 for executing an address processing on packet signal between a client and a target network thereof.

The address processing unit 13 is connected between the trunk network 12 and the open network 1.

The remote access network 81 has a gateway (GW) 80, and it is connected via the GW 80 to the address processing unit 13.

The department network 83 has a fire wall (FW) 82, and it is connected via the FW 82 to the trunk network 12.

The open network 1 has a DHCP server 5 for distributing access addresses in it to clients.

The operation of this example will now be described. As an example, an operation case is taken in which a client 2 in the open network 1 lets the open network 1 access a self-department network (i.e., either department network 83 or 84) as target network.

To the client 2 in the open network 1 are assigned, as access address in a local area network in an enterprise, an in-tunnel IP address AD8X corresponding to the remote access network 81, and also as access address in the open network 1, an address AD02 from the DHCP server 5.

When the client 2 accesses a self-department network (i.e., either department network 83 or 84) as target network, it produces a capsule of a packet signal in its own terminal, and transmits the capsule to the address processing unit 13.

More specifically, the client 2 produces the packet signal capsule by adding a capsule header, in which an address AD02 in its open network 1, as shown in (1) in Fig. 14, is set as tunnel transmission address and also an address AD13 of the address processing unit 13 as tunnel destination address, and transmits the packet signal in the form of this capsule to the address processing unit 13.

When the address processing unit 13 receives the packet signal with tunnel destination address of AD13, it converts the tunnel destination address AD13 to an address AD80 of the GW 80, as shown in (2) in Fig. 14, and transfers the resultant packet signal to the GW 80.

The GW 80 restores the original packet signal by removing the capsulation header from the transferred packet signal, and feeds this packet signal to the remote access network 81.

While at this time it is possible to address with packet signal the department network 84 without any FW, for making it possible to access the department network 83 having the FW 82 it is necessary to provide with respect to the FW 82 such a setting as to allow passage of a packet signal with a source address of AD8X.

The communication of packet signal to the client 2 in the open network 1 is realizedbythe converse processing.

More specifically, the GW 80 produces a capsule of a packet signal addressed to the client 2 by adding as capsule header, in which the address AD02 of the client 2 in the open network 1, as shown in (3) in Fig. 14, is set as tunnel destination address and the own address AD80 is set as tunnel source address.

The address processing unit 13 converts the tunnel source address set in the packet signal from the GW 80 from AD80 to the own address of AD13, as shown in (4) in Fig. 14, and transmits the resultant packet signal to the open network 1.

As the technique for realizing such network access system are disclosed those in, for instance, the following Literatures 1 to 3.
Literatures 1: Japanese Laid-Open 2001-160828
Literatures 2: Japanese Laid-Open 2001-186136
Literatures 3: Japanese Laid-Open 2001-274834

However, the prior art network access system shown in Fig. 13 has the following problems.

A first problem resides in that when a client accesses a server in a department network protected by a fire wall or the like from the outside, a hole has to be formed in the fire wall for the accessing. However, with increase of the number of clients, the number of the holes formed in the fire wall is increased, resulting in cumbersome setting and management corresponding to each client.

A second problem resides in that since the hole formed in the fire wall should be open at all times, this weakens the security aspect.

As a third problem, while an IP sec (IP security), in which the security is made more stringent is available as a technique for carrying out tunnel communication by producing capsules of packet signals, it is impossible to extend a tunnel using the IP sec technique up to any department network.

Accordingly, the present invention has a primary object of providing a network access system, which permits simplifying the setting and management corresponding to each client irrespective of the client number increase.

A second object of the present invention is to provide a network access system, which makes it unnecessary the above hole formation between client and server in any department network or the like and permit realizing high security.

A third object of the present invention is to provide network access system, which permits extension of a tunnel using the IP sec technique up to a department network.

According to an aspect of the present invention, there is provided a network system comprising:
a plurality of sub-networks;
an authentication server for authenticating a client in one of the plurality of sub-networks in response to an authentication request of the client when establishing a communication session for packet communication between the terminal of the client and a different sub-network as a client's target;
an address processing unit for executing, after the authentication by the authentication server and on the basis of an instruction from the authentication server, an address processing of packet signals in packet communication between the client's terminal and the sub-network as the client's target.

The authentication request from the client includes data of the sub-network as the client's target. The authentication server has a correspondence table provided for each client and showing one or more sub-networks as client's targets and specifies the sub-network as the client's target on the basis of the correspondence table, and an address translation table showing the correspondence between data specifying the communication session on the packet signal and address data corresponding to the sub-network as the client's target, is set in the address processing unit.

The client's terminal sends out the packet signal by setting the address of the address processing unit as destination address; and the address processing unit specifies the sub-network as the client's target on the basis of the data specifying the communication session on the packet signal in the address translation table, and translates the destination address of the packet signal to address data corresponding to the specified sub-network.

The source address is used as the data specifying the communication session on the packet signal. The session discrimination data is set on the packet signal as at least part of the data specifying the communication session. The address processingunit receiving a packet signal addressed to the client from the sub-network as the client's target, translates the source address of the packet signal to the own address and sends out resultant packet signal. The sub-network has a gateway unit, and the address of the gateway unit is used as the address corresponding to the sub-network.

The gateway unit and the client terminal have a function of tunnel communication with respect to the packet signal havingbeen capsulatedby adding a capsulationheader describing the address; and the gateway unit deletes the capsulation header from the packet signal addressed to the gateway unit and feeds the resultant packet signal to the own sub-network. The gateway unit records, in correspondence to one another, the source address of the packet signal addressed to its own in the capsulation header and the address assigned to the client's terminal in the own network, and when detecting a packet signal with the correspondence address as the destination address, capsulates the packet signal by setting the source address in the capsulation header that is made to correspond to the correspondence address as the destination address of the packet signal and also setting the own address as the source address of the packet signal for sending out the packet signal.

In the above network access system, a plurality of the sub-networks are connected to pluralities of authentication servers and each have a proxi authentication server; the client's terminal executes the request of the client authentication by accessing the proxi authentication server; and the proxi authentication server specifies the authentication server of the sub-network as the client's target on the basis of the authentication request from the client, inquires the specified authentication server about whether the authentication is possible or not, and when the client is certified by the authentication server allows the client's accessing.

The authentication server issues session discrimination data specifying the communication session to the terminal of the client certified either directly by it or via the proxi authentication server; and the client's terminal adds the session discrimination data issued from the authentication server to the packet signal.

The authentication server reports, at the time of the client authentication, the address of the address processing unit to be accessed to the terminal of the pertinent client; and the client terminal executes packet communication with the sub-network as the client's target via the address processing unit reported from the authentication server.

The sub-network has a gateway unit positioned as the client; and the gateway unit executes tunnel communication of the capsulated packet signal with the sub-network as the target of the client in the own sub-network, executes, when receiving an authentication request for the communication session establishment from the client in the Own sub-network, the client authentication request to the authentication server in lieu of the client, anduses session discrimination data for specifying the communication session as at least part of the data specifying the communication session on the packet signal.

The server reports, in response to the client authentication request from the gateway unit, the data specifying the address of the sub-network as the client's target to the gateway unit; and when the gateway unit detects the packet signal addressed to the sub-network as the client's target on the basis of the data reported from the authentication server, it specifies the client from the source addresses of the packet signal, and when it confirms that the specified client has received the authentication for the communication session establishment, it capsulates the packet signal by setting the session discrimination data in part of the capsulation header and sends out the capsulated packet signal to the address processing unit.

According another aspect of the present invention, there is provided a network access system in which an authentication server executes authentication of a client in an open network in response to an authentication request from the client at the time of the accessing of a department network by the client, and an address processing unit executes, after the authentication of the client by the authentication server and on the basis of an instruction from the authentication server, an address processing of packet signal concerning packet communication between the client and the department network.

Other objects and features will be clarified from the following description with reference to attached drawings.
Fig. 1 shows a system structure of a network access system according to a first to third embodiments of the present invention;
Fig. 2 is a view for explaining communication procedures in the embodiment according to the present invention;
Fig. 3 is a view indicative of the address transform table in the address processing unit shown in Fig. 1;
Fig. 4 is a view for explaining the address transform process of the capsule packet signal in the first embodiment according to the present invention;
Fig. 5 is a view for explaining the address transform process of the capsule packet signal in the third embodiment according to the present invention;
Fig. 6 shows a system structure of a network access system according to a fourth embodiment of the present invention;
Fig. 7 shows a system structure of a network access system according to a fifth embodiment of the present invention;
Fig. 8 shows a system structure of a network access system according to a sixth embodiment of the present invention;
Fig. 9 shows a system structure of a network access system according to a seventh embodiment of the present invention;
Fig. 10 shows a system structure of a network access system according to an eighth and ninth embodiments of the present invention;
Fig. 11 is a view for explaining the contents of the capsule packet signal in the eighth embodiment according to the present invention;
Fig. 12 shows a system structure of a network access system according to a tenth embodiment of the present invention;
Fig. 13 shows a system structure of prior art network access system; and
Fig. 14 is a view for explaining the address transform process of the address transform process of the capsule packet signal in the prior art system.

Preferred embodiments of the present invention will now be described with reference to the drawings.

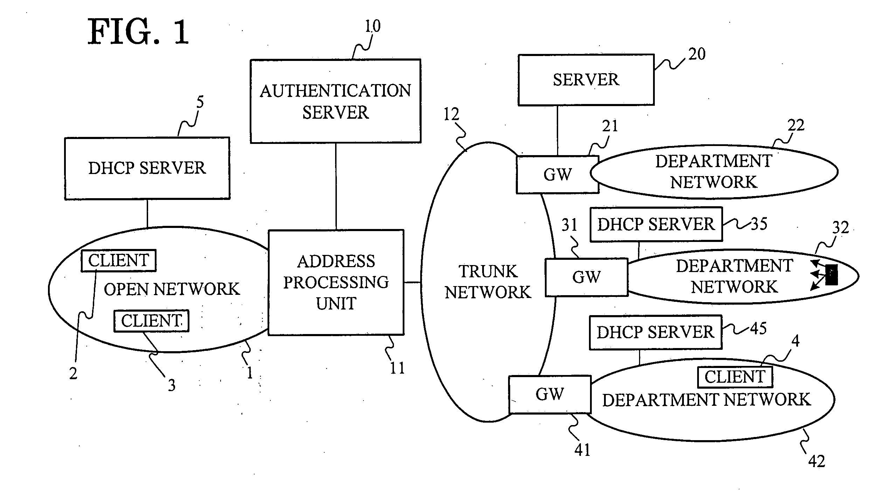

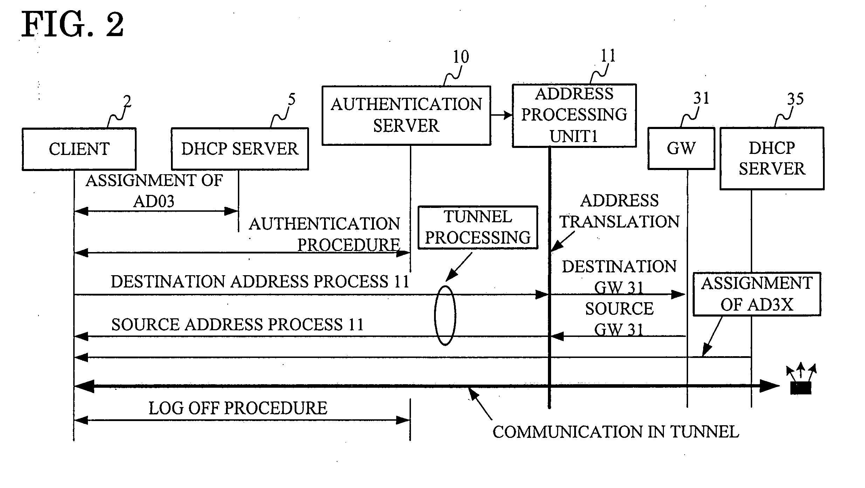

A first embodiment of the network access system according to the present invention will now be described with reference to Figs. 1 and 2.

Referring to Fig. 1, this embodiment has an arrangement comprising an open network 1 permitting openly accessing internet or the like, a trunk network 12 and department networks 22, 32 and 42 in an enterprise, an authentication server 10 for authenticating a client outside a target network in response to a client's authentication request at the time of establishing a communication session for packet communication between the client and the target network, and an address processing unit 11 for executing an address process of packet signals concerning packet communication between the client and target network on the basis of an instruction from the authentication server 10 after the authentication thereby.

The address processing unit 11 is connected to the trunk network 12 and the open network 1, and is also connected via the trunk network 12 to gateways (GW) 22, 32 and 42. It is possible as well to connect the address processing unit 11 without agency of the trunk network 12 but directly to the GWs 21, 31 and 41.

The authentication server 10 is connected via the address processing unit 11 to the open network 1 and the trunk network 12. It is possible as well to connect the authentication server 10 without agency of the address processing unit 11 but directly to the open network 1 and the trunk network 12.

The individual department networks 22, 32 and 42 have their own GWs 21, 31 and 41, and are connected via these GWs 21, 31 and 41 to the trunk network 12.

The open network 1 has a DHCP server 5 for assigning access addresses in it to the clients, and department networks 32 and 42 have DHCP servers 34 and 45, respectively, for assigning access addresses in them to the clients.

The operation of the embodiment will nowbe described. This embodiment is applied to a case, in which a client in the open network 11 accesses its own department network as target network. An operation example is now taken, in which the client 3 belonging to the department network 32 accesses the department network 32 as target network from the open network 1.

Referring to Fig. 2, the client 3 receives, in the own terminal, an access address AD03 in the open network 1 as assigned by the DHCP server 5.

The client 3 then accesses, on the own terminal, the authentication server 10 for authentication. In this accessing, the client 3 inputs client specification data for specifying it (for instance, log-in name or user name or password) to the authentication server 10.

The authentication server 10 authenticate or certifies the client 3 on the basis of the client specification data and password inputted from the client 3, and then specifies the department network 32, which the client 3 belongs to. The authentication server 10 has a correspondence list of client specification data and corresponding department networks, to which the clients specified by the client specification data belong, and specifies the department network 32, to which the client 3 belongs, by using this correspondence list. In the case ofaclienthavingapluralityofregisteredtargetnetworks, apluralityofclientspecificationdatamaybesetaccording to the target networks in such way as adding target network data to an authentication request or translating the user name.

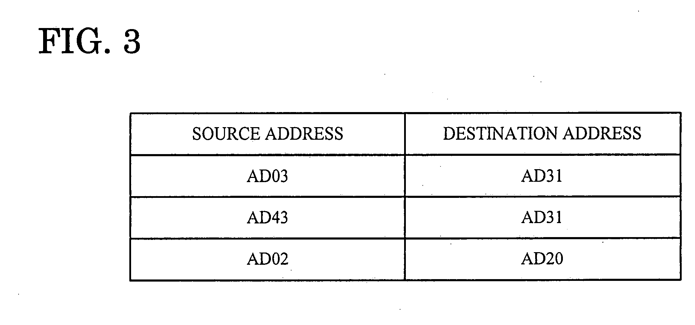

Subsequently, the authentication server 10 sets an address translation table, in which an address AD31 of the GW 31 of the specified department network 32 and an address AD03 of the client 3 in the open network 1 are entered in correspondence to each other, as shown in Fig. 3, in the address processing unit 11.

When the authentication by the authentication server 10 has been made, the client 3 sets, in the own terminal, a tunnel between it and the GW 31 via the address processing unit 11, and carries out tunnel type communication of packet signal in the form of capsule.

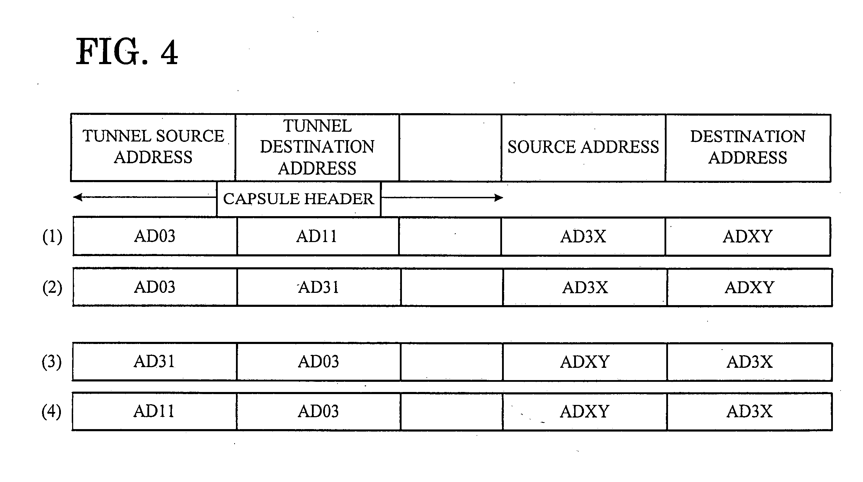

More specifically, the client 3 produces the capsule of the packet signal by adding a capsulation header, which is formed by setting the address AD03 of the client 3 in the open network 1 as tunnel source address and setting the address AD11 of the address processing unit 11 as tunnel destination address, as shown in (1) in Fig. 4, and transmit the resultant packet signal in the form of the capsule to the address processing unit 11.

When the address processing unit 11 receives the packet signal from the client 3, it recognizes, with reference to the address translation table shown in Fig. 3, that the address AD31 of the GW31 has been made to correspond to the source address AD03 set in the packet signal.

The address processing unit 11 thus translates the tunnel destination address AD11 in the packet signal from the client 3 to the address AD31 of the GW 31, as shown in (2) in Fig. 4, and transmits the resultant packet signal to the trunk network 12. As a result of this processing, the tunnel that has been set between the client 3 and the address processing unit 11 is extended up to the GW 31.

The GW 31 restores the original packet signal by removing the capsulation header from the packet signal from the client 3, and feeds the restored packet signal to the department network 32. In this way, the client 3 can communicate with other clients in the department network 32 in such a state that it is just like present in the department network 32, as shown by the black square mark shown in the department network 32 in Fig. 1.

Then, the DHCP 35 assigns an address AD3X in the department network 32 via the tunnel set between the client 3 and the GW 31 to the client 3. The GW 31 also monitors the source address of the client 3 to recognize that the address of the client 3 in the open network 1 is the address AD03. The GW 31 further records the address AD03 of the client 3 in the open network 1 and the address AD3X in the department network 32 as assigned to the client 3 by the DHPC server 35 in correspondence to each other.

Subsequently, communication from the department network 32 via the GW 31 to the client 3 in the open network 1 is realized by the converse processing.

More specifically, when the GW 31 detects that apacket signal with the address AD3X of the client is present in the department network 32 as destination address, it produces the capsule of the packet signal by adding a capsulation header, in which the address AD03 of the client 3 in the open network 1 is set as tunnel destination address and the own address AD31 is set as tunnel source address, as shown in (3) in Fig. 4, and transmits this capsule to the trunk network 12.

The above packet signal, in which the address AD03 not present in the trunk network 12 and department networks 22, 32 and 42 inside the enterprise is set as destination address, is transferred by a rooting process in the trunk network 12 to the address processing unit 11.

The address processing unit 11 translates the tunnel source address set in the transferred packet signal from AD31 to the own address AD11, as shown in (4) in Fig. 4, and then transmits the resultant packet signal to the open network 1

As an alternative to this embodiment, it is possible to arrange such that the address AD03 in the open network 1 or the address AD3X in the department network 32, is assigned periodically.

The address processing unit 11 can also prohibit communication from a client not present in the address translation table, i.e., non-authenticated accessing, and since the address translation table is registered at the time of the authentication by the authentication server 10, it is unnecessary to preliminarily set the address translation table.

As a further alternative, the address processing unit 11 may be adapted such that when it detects the end of communication by a certain client, it deletes the address data of the client pertaining to the communication from the address translation table. In this case, accessing via the address processing unit 11 becomes impossible, and it is thus possible to improve the security.

As a still further alternative, it is possible to arrange such that the IP sec technique is used between the client and the GWs 21, 31 and 41 of the department networks 22, 32 and 42 to let ciphered packet signal pass through the tunnel.

Moreover, the GWs 21, 31 and 41 can prohibit accessing from any client without agency of the address processing unit 11 to the department networks 22, 32 and 42, and it is thus possible to maintain high security.

A second embodiment of the network access system according to the present invention will now be described with reference to Fig. 1.

This embodiment is applied to the case, in which a client in a department network different from the own one in the same enterprise accesses the own department network as target network. The embodiment has the same arrangement as shown in Fig. 1, and the arrangement is not described.

The operation of the embodiment will nowbe described. An operation example is now taken, in which a client 4 belonging to the department network 32 accesses the department network 32 as target network from the department network 42.

First, the client 4 receives, in its own terminal, an assigned access address AD43 in the department network 42 from the DHCP server 45, and then accesses the authentication server 10 for the authentication.

After making the authentication of the client 4, the authentication server 10 specifies the department network 32, to which the client 4 belongs and, as shown in Fig. 3, sets an address translation table, in which the address AD43 of the client 4 in the department network 42 and the address AD31 of the GW 31 are entered in correspondence to each other, in the address processing unit 11.

When the authentication by the authentication server 10 has been made, the client 4 sets, in the own terminal, the address AD11 of the address processing unit 11 as tunnel destination address, then produces a capsule of the packet signal by adding a capsulation header, in which the address AD43 of the client 4 in the department network 42 is set as tunnel source address, and the resultant packet signal capsule to the access processing unit 11.

When the address processing unit 11 receives the packet signal from the client 4, it translates the tunnel destination address AD11 from the client to the address AD31 of the GW 31 with reference to the address translation table shown in Fig. 3, and relay transfers the resultant packet signal to the GW 31.

Communication from the department network 32 to the client 4 in the department network 42 is realized by the converse processing.

More specifically, when the GW 31 detects in the department network 32 a packet signal addressed to the client 4, it produces the capsule of the packet signal by adding a capsulation header, in which the address AD43 of the client 4 in the department network 42 is set as tunnel destination address and the own address AD31 is set as tunnel source address, and transmits the resultant packet signal capsule to the trunk network 12.

The above packet signal, in which the address AD43 in the department network 42 in an enterprise is set as destination address, is transferred without agency of the address processing unit 11 directly to the department network 42 in a rooting process executed in the trunk network 12.

In this embodiment, in case when a private address is accessed in the enterprise and a global address is accessed from the open network 1, the address processing unit 11 has its own address. More specifically, an address in the address processing unit 11 for accessing by the clients 2 and 3 in the open network 1 is the global address, and an address in the address processing unit for accessing by the client 4 in the other department network 42 is the address in the enterprise.

This embodiment is applied to the case, in which a certain client accesses the own department network as target network from the outside without producing any packet signal capsule. The embodiment has the same arrangement as shown in Fig. 1, and the arrangement is not described.

The operation of the embodiment will nowbe described. An operation example is now taken, in which the client 2 belonging to the department network 22 accesses the department network 22 as target network from the open network 1 without producing any packet signal capsule.

When the authentication server 10 has made the authentication of the client 2, it specifies the department network 22, to which the client 2 belongs and, as shown in Fig. 3, sets an address translation table, in which the address AD02 of the client 2 in the open network 1 and the address AD20 of the exclusive communication server 20 to be accessed from the outside of the department network 22 are entered in correspondence to each other, in the address processing unit 11.

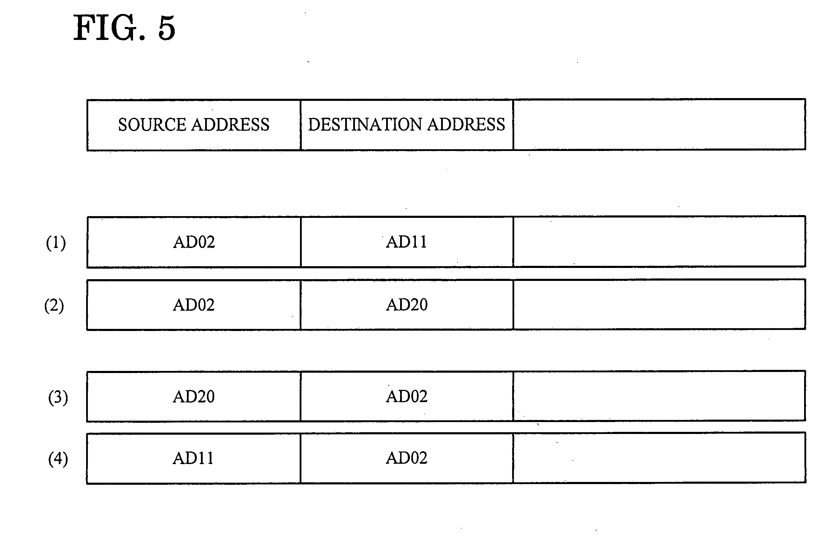

When the authentication by the authentication server 10 has been made, the client 2 transmits, in the own terminal, a packet signal, in which the address AD11 of the address processing unit 11 is made to be the destination address, as shown in (1) in Fig. 5.

When the address processing unit 11 receives the packet signal from the client 2, it translates the destination address of the packet signal from the client 2 to the address AD20 of the server 20, as shown in (2) in Fig. 5, with reference to the Fig. 3 address translation table, and relay transfers the packet signal to the GW 21. The GW 21 transfers the packet signal to the server 20 on the basis of the address AD20 set in the packet signal.

In this way, the client 2 can be connected to the server 20 although fixed-wise. As shown, without use of the capsule production technique, by preparing the communication exclusive server 20 with respect to accesses from the outside of the department network 22, accessing in the department network 22 from the outside is possible, and it is also possible to prohibit accessing to different resources in the department network 22.

Communication from the server 20 to the client 2 in the open network 1 is realized by the converse processing. (3) in Fig. 5 shows an address header set for packet signal from the server 20 up to the address processing unit 11, and (4) in Fig. 5 shows an address header set for packet signal from the address processing unit 11 to the client 2.

As an alternative case when accessing from the outside of the department network 22 occurs, it may be set that the accessing is limited to the server 20 for the transfer. Again in this case, it is possible to prohibit accessing to different resources in the department network 22.

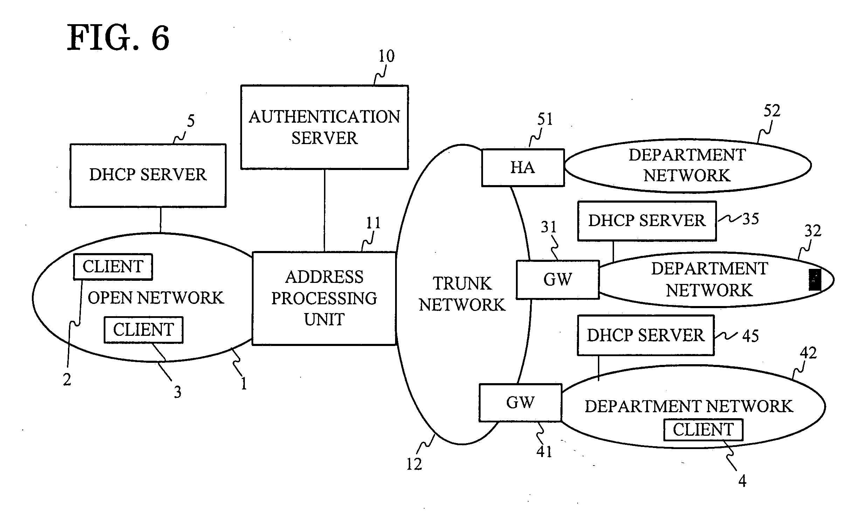

Referring to Fig. 6, the embodiment has an arrangement that a department network 52 is connected via a home agent (HA) 51 using a mobile IP to the trunk network 12.

The packet signal using the mobile IP protocol is also in the form of a capsule as shown in Fig. 4. Thus, by disposing the HA 51 in lieu of the GW 31 terminating the tunnel, like the first embodiment, it is possible to extend the tunnel based on the mobile IP up to the department network 52.

More specifically, in this embodiment a client belonging to the department network 52 and having been authenticated by the authentication server 10, can receive mobile services with the department network 52 connected to the HA 51 as base irrespective of whether it is in the open network 1 (such as clients 2 and 3) or in the department networks 32 and 42 (such as client 4).

This embodiment does not limit the kind and system of the end-to-end capsule production protocol itself between the client and the GW, and is thus applicable to a usual communication system for packet signal capsule communication.

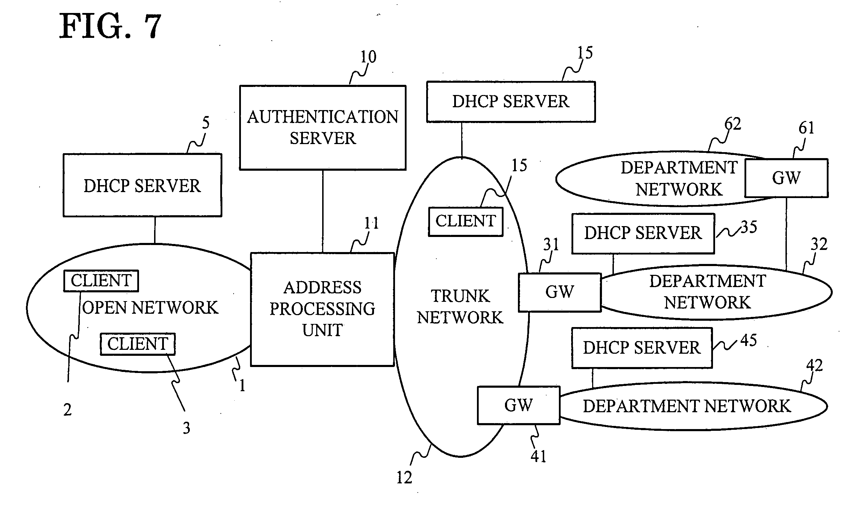

Referring to Fig. 7, this embodiment has an arrangement that a department network 62 is connected via a GW 61 and the other department network 32 to the trunk network 12.

In this embodiment, the tunnel from a client belonging to the department network 62 is extended through the GW 31 up to the GW 31. The tunnel extension up to the GW 61 can be obtained by setting the GW 61 passes packet signals with GW 61 as the destination, and this means that the security of the department network 32 passingpacket signals is free from being weakened.

To summarize this embodiment, so long as each network has a rooting function, a client belonging to the department network 62 access, in the own terminal, the own department network 62 after receiving the authentication by the authentication server 10 irrespective of whether it is in the open network (such as clients 2 and 3) or in the department networks 32 and 42 or in the trunk network 12 (such as client 15) .

In this embodiment, the trunk network 12 may, If necessary, have DHCP server for assigning access addresses in it to clients.

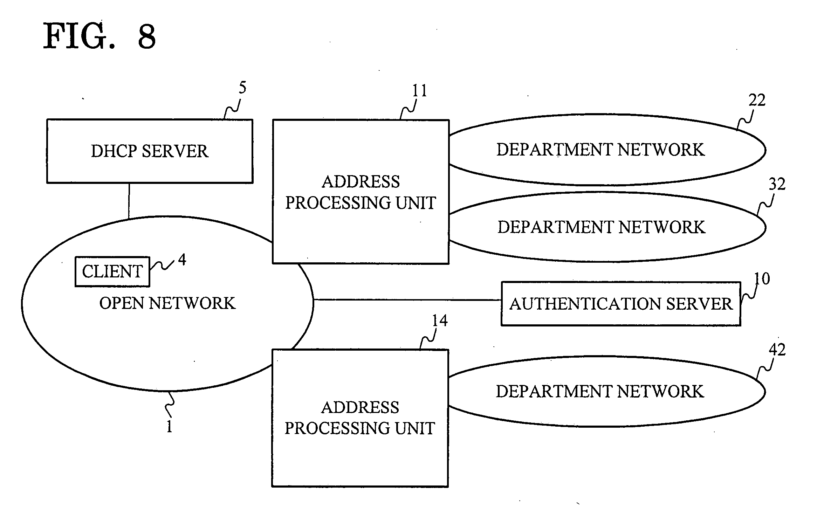

Referring to Fig. 8, this embodiment has an arrangement that a plurality of address processing units 11 and 14 are provided under the authentication server 10.

The department networks 22 and 32 are connected without agency of any GW or trunk network but directly to the address processing unit 11, and the department network 42 is connected without agency of any GW or trunk network but directly to the address processing unit 14.

In this embodiment, when the authentication server 10 recognizes the client in the open network 1, it specifies the department network 42, to which the client 4 belongs, on the basis of client specification data inputted from the client 4. The authentication server 10 then reports the address AD14 of the address processing unit 14 connected to the specified department network 42 to the client 4.

The client 4 produces, on the own terminal, a capsule of the packet signal with the address AD14 of the address processing unit 14 as reported from the authentication server 10 as destination address, and does remote accessing in the manner as in the first embodiment.

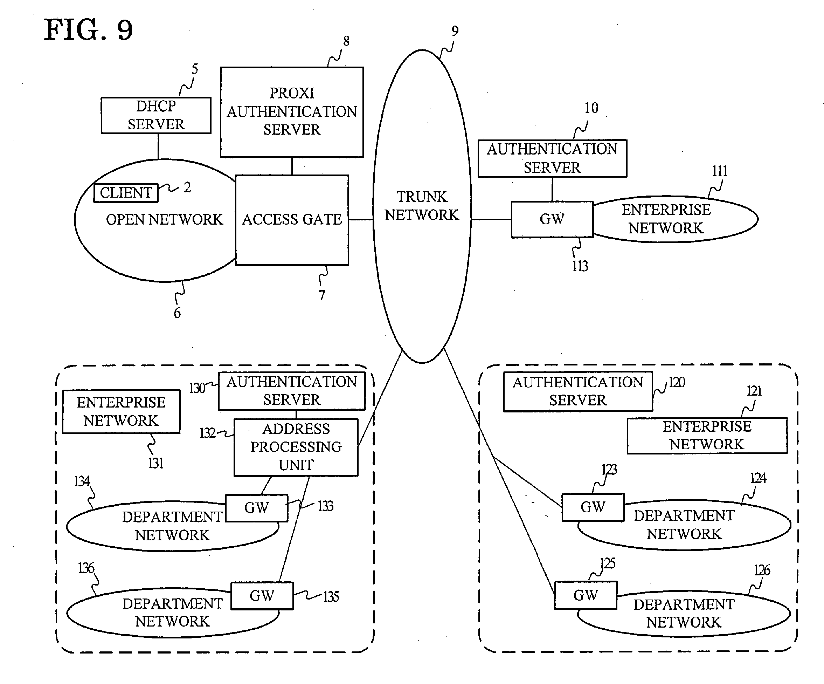

Referring to Fig. 9, this embodiment has an arrangement that the clients in an access network 6 can access a plurality of enterprise networks 111, 121 and 131 via the trunk network 9.

The access network 6 has an access gate 7 and a proxi authentication for controlling the client's accessing, and is connected via the trunk network 9 to the plurality of enterprise networks 111, 121 and 131.

The enterprise network 111 has an authentication server 110. The enterprise network 111 has a GW 113 for terminating an IP tunnel, and is connected via the GW 113 and the trunk network 9 to the access network 6.

The enterprise network 121 is constituted by department networks 124 and 126, and has an authentication server 120. The department networks 124 and 126 have GWs 123 and 125, respectively, for terminating the IP tunnel, and are connected via the GWs 123 and 125, respectively, and the trunk network 9 to the access network 6.

The enterprise network 131 is constituted by department networks 134 and 136, and has an authentication server 130 and an address processing unit 132. The department networks 134 and 136 have GWs 133 and 135 for terminating the IP tunnel, and are connected via the GWs 123 and 125, respectively, the address processing unit 132 and the trunk network 9 to the access network 6.

It is assumed that the enterprise networks 111, 121 and 131 and the access gate 7 are connected to one another by a virtual private network on the trunk network 9.

In the operation of the embodiment, three different fashions of accessing from the client 2 in the access network 6 will now be described as respective operation examples.

In the first place, an operation example will be described as a case, in which the client 2 belonging to the enterprise network 111 accesses the enterprise network 111 as target network from the access network 6.

In the own terminal, the client 2 first accesses the proxi authentication server 8 for the authentication by inputting client specification data (such as user name and company name) and password specifying the client 2.

The proxi authentication server 8 recognizes, on the basis of data representing the pertinent enterprise (in this case the company name as domain name) among the client specification data (for instance user name or company name) of the client, that the client 2 belongs to the enterprise network 111, inquires the authentication server 110 provided in the enterprise network 111 about whether the authentication is possible or not.

When the proxi authentication server 8 receives a report indicative of the authentication from the authentication server 110, it instructs the access gate 7 to make setting allowing communication from the client 2. By this control, the client 2 is logged in a virtual private network on the trunk network 9 connecting the access gate 7 and the GW 113 to each other.

The access gate 7 translates, on the basis of the instruction from the proxi authentication server 8, the destination address of the packet signal from the client 2 to the address of the GW 113.

Since the GW 113 is provided in the enterprise network 111, the address of the GW 113 may be a private address.

Now, another operation example will be described as a case, in which the client 2 belonging to the enterprise network 131 accesses the enterprise network 131 as target network from the access network 6.

When the proxi authentication server 8 recognizes, on the basis of client specification data from the client 2, that the client 2 belongs to the enterprise network 131, it inquires the authentication server 130 provided in the enterprise network 131 about whether the authentication is possible or not.

When the proxi authentication server 8 receives a report indicative of the authentication from the authentication server 130, it instructs the access gate 7 to translate the destination address of the packet signal from the client 2 to the address of the address processing unit 132, and the access gate 7 translates the destination address set in the packet signal from the client 2 to the address of the address processing unit 132. By this control, the IP tunnel from the client 2, which belongs to, for instance, the department network 134, is relayed by an IP address translating process in the access gate 7 and the address processing unit 132, and is extended up to the GW 133.

Now, a further operation example will be described as a case, in which the client 2 belonging to the enterprise network 121 accesses the enterprise network 121 as target network from the access network 6.

When the proxi authentication server 8 recognizes, on the basis of the client specification data from the client 2, that the client 2 belongs to the enterprise network 121, it inquires the authentication server 120 provided in the enterprise network 121 about whether the authentication is possible or not.

When the proxi authentication server 8 receives a report indicative of the authentication from the authentication server 120, it receives at the same time a report of the IP address of the GW in the department network, to which the client 2 belongs.

For example, when the client 2 belongs to the department network 124, the proxi authentication server 8 receives a report of the address of the GW 123, and instructs the access gate 7 to translate the destination address of the packet signal from the client 2 to the address of the GW 123. The access gate 7 thus translates the destination address of the packet signal from the client 2 to the address of the GW 123. By this control, the IP tunnel extending from the client 2 is extended up to the GW 123. In this way, it is possible to provide the access gate 7 with a function of assigning destination addresses in the enterprise network 121.

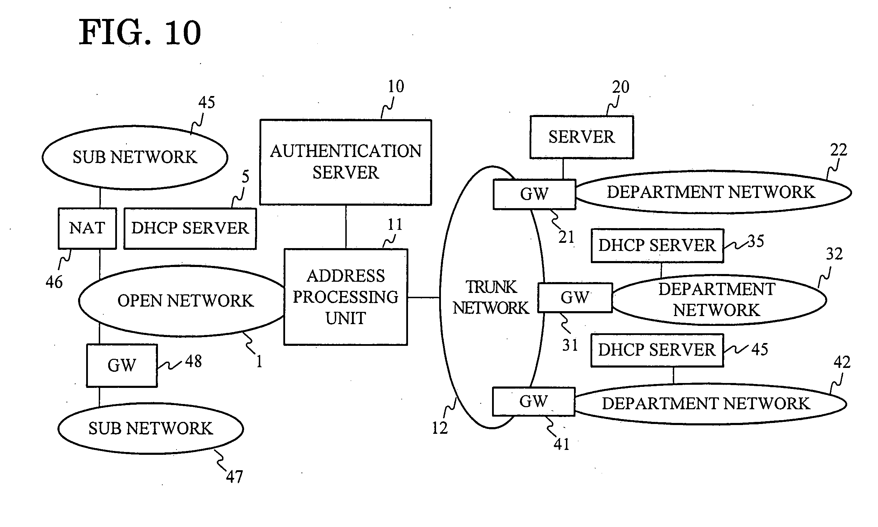

Referring to Fig. 10, this embodiment has such an arrangement that a client accesses the own department network as target network via a network address translator (NAT) .

The NAT 46 connects a sub-network 45 to the open network 1. The open network 1 is connected via a GW 48 to a sub-network 47.

The operation of the embodiment will nowbe described. Here, an operation example will be described as a case, a client in the sub-network 45 does accessing from the sub-network 45 via the NAT 46.

The NAT 46 translates the IP address as destination of a packet signal transmitted from a client in the sub-network 45 to a different address, and sends out the result to the open network 1.

At this time, in case when the IP address obtained by the translation in the NAT 46 is commonlyhadby a plurality of clients in the sub-network 45, a case is liable that the address processing unit 11 can not specify any target network.

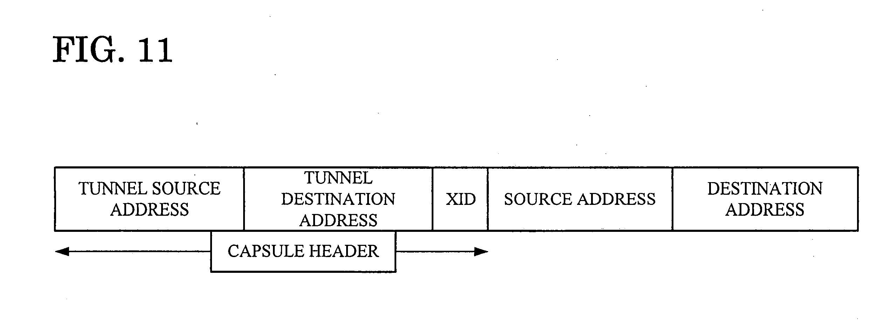

In this case, as shown in Fig. 11, when the client in the sub-network 45 produces a packet signal capsule, it inserts client specification data XID specifying the client in the capsulation header.

In this case, by using the source address plus XID or the sole XID as client specification data in lieu of the source address in the address translation table in the address processing unit 11 in Fig. 3, like the first embodiment, the address processing unit 11 can do accessing by specifying the target network.

When the GW of the target network receives a packet signal from a client in the sub-network 45, it directly inserts the XID in the received packet signal as XID of the capsulation header, and transmits the resultant packet signal to the client in the sub-network 45 or the GW 48.

The method of using XID as above is applicable to the case, in which a single client accesses a plurality of different target networks at a time. In this case, a plurality of XIDs are given to the client (either in the open network 1 or in the sub-network 45), and the client receives the authentication by the authentication server 10 by adding target network data as well and assign the XIDs to the target networks. Thus, the address processing unit 11 can specify a plurality of different networks, and the client can access the plurality of target networks at a time.

Also, even in the case, in which the NAT 46 uniformly translates the tunnel source addresses of packet signals transmitted from clients in the sub-network 45 to AD46, by assigning the XIDs such that the address processing unit 11 can specify all the tunnel sessions in the sub-network 45, a plurality of clients can access pluralities of different target networks at a time.

In this embodiment, the XID data specifying clients may be preliminarily fixedly set for the clients, or may be assigned to the clients by the authentication server 10 at the time of the authentication.

When a client accesses different target networks, for the authentication by the authentication server 10, either user name and target network name may be combined, or different user names may be set each for each target network.

While it is possible, by setting the XID to be sufficiently long, the address processing unit 11 can make address translation on the basis of the XID, to improve the endurance with respect to faulty XID, the address translation is desirably made on the basis of the tunnel source address plus XID.

This embodiment is applied to the case, in which inter-GW tunnel control is made when a client accesses the own department network as target network. This embodiment is the same in arrangement as in Fig. 10, and the arrangement is not described.

The operation of the embodiment will nowbe described. An operation example is taken as a case, IP tunnel control is made between the GW 48 and the GW of either one of the department networks 22, 32 and 42 in the trunk network 12.

First, a client in the sub-network 47 accesses, in the own terminal, the GW 48 having the function of a proxi authentication server (see Fig. 9) for the authentication.

The GW 48 records the correspondence of the client address in the sub-network 47 and the user name to each other, and relays the client's user name and password to the authentication server 10 by transferring a packet signal with the own address AD48 as source address to the authentication server 10.

When a client in the sub-network 47 can be authenticated on the basis of an authentication request relayed by the GW 48, the authentication server 10 sets the XID corresponding to the authentication request, the address AD48 of the GW 48 and the address of the GW of the target network in the address translation table in the address processing unit 11, and reports the user name and the XID to the GW 48.

As for a packet signal from a client corresponding to the user name reported from the authentication server 10 and addressed to a different sub-network, as shown in Fig. 11, the GW 48 produces a capsule by adding the XID, and sends out the packet to the open network 1.

The address processing unit 11 translates, on the basis of the tunnel source address AD48 and the XID data set in the packet signal from the client, the tunnel destination address to the address of the GW of the target network, and transfers the resultant packet signal to the GW of the target network.

In the above way, it is possible to realize the tunnel control between the GW of the target network in the trunk network 12 and the GW 48, and the client in the sub-network 47 thus can access the target network set for it.

When the GW of the target network receives the packet signal from the client in the sub-network 45, it directly inserts the XID in the received packet signal as the XID of the capsulation header and transmits the capsule to the client in the sub-network 47 of the GW 48.

When a client in the sub-network 47 accesses a plurality of target networks, the following process may be executed.

When the authentication server 10 recognizes the target network at the time of the authentication, it reports the address of the sub-network recognized as target network and the XID corresponding to the address mask to the GW 48.

The GW 48 monitors the destination address of packet signal from client in the sub-network 47, and checks whether the address with the address mask is identical with the address of the above sub-network having received the authentication by the authentication server 10. When the two addresses are identical, the GW 48 sends out the packet signal as a capsule formedby inserting the XID corresponding to the address with the address mask in the capsulation header, as shown in Fig. 11.

As for the XID, the XID may be reported to the GW 48 at the time of the authentication by the authentication server 10, or a plurality of XIDs may be preliminarily pooled in the GW 48. In such case, the GW 48 makes an authentication request to the authentication server 10 by adding a preliminarily pooled non-use XID, and this XID is registered in the address translation table in the address processing unit 11.

This embodiment is also applicable to a network arrangement, in which the addresses of the sub-networks 45 and 47 and the address of the target network are made to be private addresses and the address of the open network 1 is made to be a global address.

Also, by selecting a sufficient XID length, the address processing unit 11 can make the address translation on the basis of the XID, but for improving the endurance with respect to faultyXID it is desirable to make the address translation on the basis of the tunnel source address plus XID.

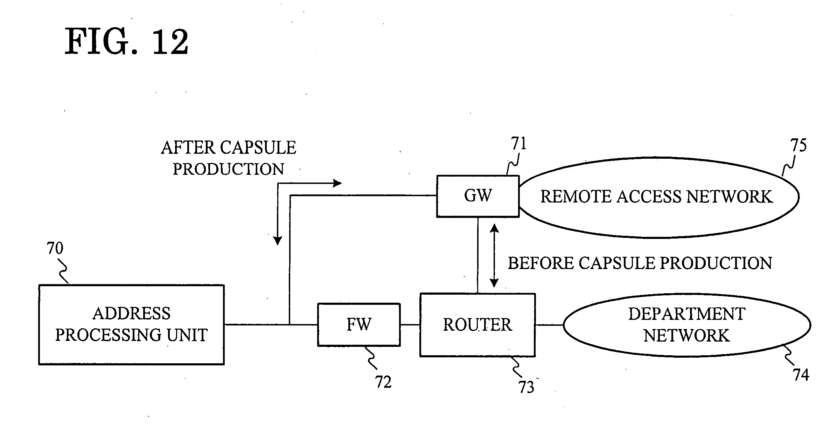

Referring to Fig. 12, this embodiment has an arrangement that not the own department network of a client but a network, which corresponds to the own department network of the client and is set exclusively for network accessing, is made to be the target network in order to simplify IP tunnel control in GW.

To each client belonging to the department network 74, a remote access network (IPsub-network) 75 corresponds, and the client's target network is not the department network 74 but the network access network 75.

The department network 4 is connected via a fire wall (FW) 72 and a rooter 73 to an external network (not shown) , in which an address processing unit 70 is provided.

When the GW 71 receives a capsuled packet signal transferred from the address processing unit 70 (the destination address of the capsulation header being GW71), the GW 71 restores the original packet signal by deleting the capsulation header from the received packet signal. This original packet signal is transferred via the rooter 73 to the department network 74.

Specifically, a client in the external network is connected without agency of the FW 72 to the department network 74, and thus can access the department network 74 without agency of the FW 72.

A packet signal addressed to a network access client belonging to the remote access network 75, is transferred from the department network 74 via the rooter 73 to the GW 71 to be capsuled in the GW 71, which transfers the capsuled packet signal to the address processing unit 70.

In this embodiment, the rooter 73 distributes packet signals to be capsulated, and the GW 71 should execute only a capsulating process of packet signal of client having accessed the network (and a ciphering process in case of using the IP sec technique) . It is thus possible to simplify the various function arrangements of the GW 71, the FW 72 and the rooter 73.

As an alternative to this embodiment, the various functions of the GW 71, the FW 72 and the rooter 73 may be realized collectively in a single unit. Even in this case, since the function arrangements of the individual constituent elements are simple, it is possible to simplify the unit, which collectively has the functions of the individual constituent elements.

The invention by no means specifies the method of ending the client's communication session. The authentication server may be arranged such that, upon detection of the end of the communication session by a log-out procedure between it and the client, it deletes the client's address data concerning this communication from the address translation table. Aside from this, it is possible, by making direct keep/alive communication with the client or detecting the time-over of the non-communication state, it is possible to cope with the communication session end without regard to the log-out procedure, for instance, communication session end due to power-off or removal of network interface card. The authentication server can further knows the client's communication end by making keep/alive communication or IP sec keep/alive communication with the client in cooperation with the DHCP server of each network.

With the foregoing constitution of the invention, it is possible to obtain the following effects (1) to (9) .
(1) With the provision of an authentication server for authenticating a client for accessing a target sub-network from the outside and an address processing circuit for executing, after authentication by the authentication server, an address processing of a packet signal concerning packet communication on the basis of an instruction from the authentication server, it is possible to extend the destination of the packet signal from the client up to the a sub-network made by the client to be a target. Thus, when making tunnel type communication, it is possible to extend the IP tunnel (including IP sec tunnel and mobile IP tunnel) up to the target sub-network.
(2) Since any packet signal is transmitted without agency of any fire wall to the sub-network, the setting of forming a hole in the fire wall for the accessing is unnecessary. Thus, not only it is possible to avoid cumbersomeness increase of the setting for correspondence to the client, but also it is possible to maintain high security.
(3) The client need only set the own address in the sub-network it is present therein and the address of the address processing unit. Also, if the setting is erroneous, its influence is restricted to be between the gateway unit of the target sub-network and the client, and does not propagate over the entire network.
(4) By adopting, for instance, the DHCP system as a system for obtaining addresses of clients in the target sub-networks, no setting for each client is necessary, and it is possible to realize easy setting and eliminate setting errors.
(5) The tunnel between the client and the gateway unit of the target sub-network is provided when and only when authentication by the authentication server is obtained, and it is thus possible to realize high security.
(6) With the arrangement that certain sub-networks are connected to pluralities of authentication servers and that a proxi authentication server is provided, it is possible to realize, with a single log-in, the accessing of a virtual network for enterprise in a carrier network and the accessing of a network in enterprise from the virtual network.
(7) With the arrangement that discrimination data for discriminating a communication session, which is used as additive data in addition to the client's source address for specifying and making address translation of a sub-network as client's target network, a plurality of clients can access pluralities of different target networks at a time. Also, the client can extend the IP tunnel up to the target sub-network irrespective of presence of NAT in the tunnel route.
(8) With the arrangement that a sub-network has a gateway unit to be positioned as client, the client can access the target network even when it belongs to the gateway, and each client can access a plurality of target networks.
(9) Since the communication session is managed in the authentication server, it is possible to realize user management and access management.

Changes in construction will occur to those skilled in the art and various apparently different modifications and embodiments may be made without departing from the scope of the present invention. The matter set forth in the foregoing description and accompanying drawings is offered by way of illustration only. It is therefore intended that the foregoing description be regarded as illustrative rather than limiting

## Claims

1. A network system comprising:
a plurality of sub-networks;
an authentication server for authenticating a client in one of the plurality of sub-networks in response to an authentication request of the client when establishing a communication session for packet communication between the terminal of the client and a different sub-network as a client's target;
an address processing unit for executing, after the authentication by the authentication server and on the basis of an instruction from the authentication server, an address processing of packet signals in packet communication between the client's terminal and the sub-network as the client' s target.

2. The network access system according to claim 1, wherein:
the authentication request from the client includes data of the sub-network as the client's target.

3. The network access system according to one of claims 1 and 2, wherein:
the authentication server has a correspondence table provided for each client and showing one or more sub-networks as client' s targets and specifies the sub-network as the client' s target on the basis of the correspondence table, and an address translation table showing the correspondence between data specifying the communication session on the packet signal and address data corresponding to the sub-network as the client's target, is set in the address processing unit.

4. The network access system according to claim 3, wherein:
the client's terminal sends out the packet signal by setting the address of the address processing unit as destination address; and
the address processing unit specifies the sub-network as the client's target on the basis of the data specifying the communication session on the packet signal in the address translation table, and translates the destination address of the packet signal to address data corresponding to the specified sub-network.

5. The network access system according to one of claims 3 and 4, wherein:
the source address is used as the data specifying the communication session on the packet signal.

6. The network access system according to claim 5, wherein:
session discrimination data is set on the packet signal as at least part of the data specifying the communication session.

7. The network access system according to one of claims 1 to 6, wherein:
the address processing unit receiving a packet signal addressed to the client from the sub-network as the client's target, translates the source address of the packet signal to the own address and sends out resultant packet signal.

8. The network access system according to one of claims 1 to 7, wherein:
the sub-network has a gateway unit, and the address of the gateway unit is used as the address corresponding to the sub-network.

9. The network access system according to claim 8, wherein:
the gateway unit and the client terminal have a function of tunnel communication with respect to the packet signal having been capsulated by adding a capsulation header describing the address; and
the gateway unit deletes the capsulation header from the packet signal addressed to the gateway unit and feeds the resultant packet signal to the own sub-network.

10. The network access system according to claim 9, wherein:
the gateway unit records, in correspondence to one another, the source address of the packet signal addressed to its own in the capsulationheader and the address assigned to the client's terminal in the own network, and when detecting a packet signal with the correspondence address as the destination address, capsulates the packet signal by setting the source address in the capsulation header that is made to correspond to the correspondence address as the destination address of the packet signal and also setting the own address as the source address of the packet signal for sending out the packet signal.

11. The network access system according to one of claims 1 to 10, wherein:
a plurality of the sub-networks are connected to pluralities of authentication servers and each have a proxi authentication server;
the client's terminal executes the request of the client authentication by accessing the proxi authentication server; and
the proxi authentication server specifies the authentication server of the sub-network as the client's target on the basis of the authentication request from the client, inquires the specified authentication server about whether the authentication is possible or not, and when the client is certified by the authentication server allows the client's accessing.

12. The network access system according to one of claims 6 and 11, wherein:
the authentication server issues session discrimination data specifying the communication session to the terminal of the client certified either directly by it or via the proxi authentication server; and
the client's terminal adds the session discrimination data issued from the authentication server to the packet signal.

13. The network access system according to one of claims 1 to 12, wherein:
the authentication server reports, at the time of the client authentication, the address of the address processing unit to be accessed to the terminal of the pertinent client; and
the client terminal executes packet communication with the sub-network as the client' s target via the address processing unit reported from the authentication server.

14. The network access system according to one of claims 1 to 13, wherein:
the sub-network has a gateway unit positioned as the client; and
the gateway unit executes tunnel communication of the capsulated packet signal with the sub-network as the target of the client in the own sub-network, executes, when receiving an authentication request for the communication session establishment from the client in the Own sub-network, the client authentication request to the authentication server in lieu of the client, and uses session discrimination data for specifying the communication session as at least part of the data specifying the communication session on the packet signal.

15. The network access system according to claim 14, wherein:
the server reports, in response to the client authentication request from the gatewayunit, the data specifying the address of the sub-network as the client's target to the gateway unit; and
when the gateway unit detects the packet signal addressed to the sub-network as the client's target on the basis of the data reported from the authentication server, it specifies the client from the source addresses of the packet signal, and when it confirms that the specified client has received the authentication for the communication session establishment, it capsulates the packet signal by setting the session discrimination data in part of the capsulation header and sends out the capsulated packet signal to the address processing unit.

16. A network access system in which an authentication server executes authentication of a client in an open network in response to an authentication request from the client at the time of the accessing of a department network by the client, andanaddressprocessingunitexecutes, aftertheauthentication of the client by the authentication server and on the basis of an instruction from the authentication server, an address processing of packet signal concerning packet communication between the client and the department network.
